# FASCICULE DE BREVET EUROPEEN

(11) **EP 1 509 361 B1**
(45) Date de publication et mention de la délivrance du brevet: **23.05.2007**
(21) Numéro de dépôt: 03700303.5
(22) Date de dépôt: 03.02.2003
(51) Int. Cl.: B23Q 1/62, B23Q 1/48, B23B 3/00

(54) **CENTRE D'USINAGE MULTI AXES AVEC UNE BROCHE PORTE-PIECES**
MEHRACHSIGES BEARBEITUNGSZENTRUM MIT EINER WERKSTÜCKSPINDEL
MULTI-AXIS MACHINING CENTRE WITH A WORKPIECE-BEARING SPINDLE

(30) Priorité: 15.02.2002 CH 2632002
(43) Date de publication de la demande: 02.03.2005
(73) Titulaire: Dixi Machines SA, 2400 Le Locle (CH)
(72) Inventeur: COCHAND, Christian, CH-2400 Le locle (CH)
(86) Numéro de dépôt international: PCT/CH2003/000080
(87) Numéro de publication internationale: WO 2003/068449

(56) Documents cités:
- EP-A- 0 527 238
- EP-A- 1 122 023
- DE-A- 4 236 866
- US-B1- 6 287 245

## Description

La présente invention se rapporte à un centre d'usinage multi-axes et plus particulièrement à un centre d'usinage comportant une broche porte-pièces (voir, par exemple, US-6,287,245-B).

Avant le développement des centres d'usinage, l'usinage de pièces mécaniques nécessitait un transfert sur diverses machines séparées présentant un encombrement important et nécessitant de nombreuses interventions et en conséquence des temps d'opérations également importants.

Le développement des centres d'usinage a permis de concentrer un maximum d'opérations sur une seule machine, par un fonctionnement avec une broche porte-outils se déplaçant selon deux axes linaires, un axe vertical et un axe latéral,et un chariot porte-pièces se déplaçant selon un axe longitudinal et un axe rotatif vertical.

Sur les machines modernes, les différents déplacements sont contrôlés par ordinateur et les différents outils nécessaires pour les opérations successives sont amenés ou enlevés de la broche porte-outil d'une manière automatique.

Les formes d'exécutions connues présentent des inconvénients dus au fait qu'elles ne permettent pas dans certains cas de pièces à usiner, par exemple les pièces cylindriques ou coniques, d'effectuer toutes les opérations sur le même centre d'usinage, ce qui nécessite un transfert sur d'autres machines, ce qui présente l'inconvénient de procurer un travail important, ce qui augmente par conséquent les temps d'opérations et ce qui nécessite une surface plus importante de travail.

Le but de la présente invention permet de remédier aux inconvénients des formes d'exécutions connues.

Le but est atteint selon les principes de l'invention décrits par la revendication 1.

Le centre d'usinage selon l'invention, comporte une broche porte-outils qui peut se déplacer sur un axe vertical et sur un axe transersal, un chariot porte-pièces qui peut se déplacer sur un axe longitudinal et sur un axe rotatif vertical, et une broche porte-pièces qui est montée selon un axe horizontal sur le chariot porte-pièces, permettant ainsi en plus des autres opérations d'effectuer des opérations de tournage cylindrique, conique, ou autres formes. Dans ce cas, c'est la broche porte-pièces qui peut tourner, l'outil de coupe étant fixe dans la broche porte-outils.

Tous les différents déplacements ou rotations sont contrôlés simultanément par ordinateur et permettent ainsi de réaliser des pièces très complexes sur le même centre d'usinage, ce qui procure des gains de temps de travail et d'encombrement, et de plus ce qui dans plusieurs cas peut procurer une réduction de l'investissement en supprimant des machines annexes.

La figure 1 est une vue d'ensemble en perspective de la partie usinage du centre d'usinage.

La figure 2 est une vue en perspective de la broche porte-pièces.

La figure 3 est une vue en perspective de la broche porte-pièces avec une lunette de support.

La figure 4 est une vue en perspective de la broche porte-pièces avec la lunette de support et une contre-pointe.

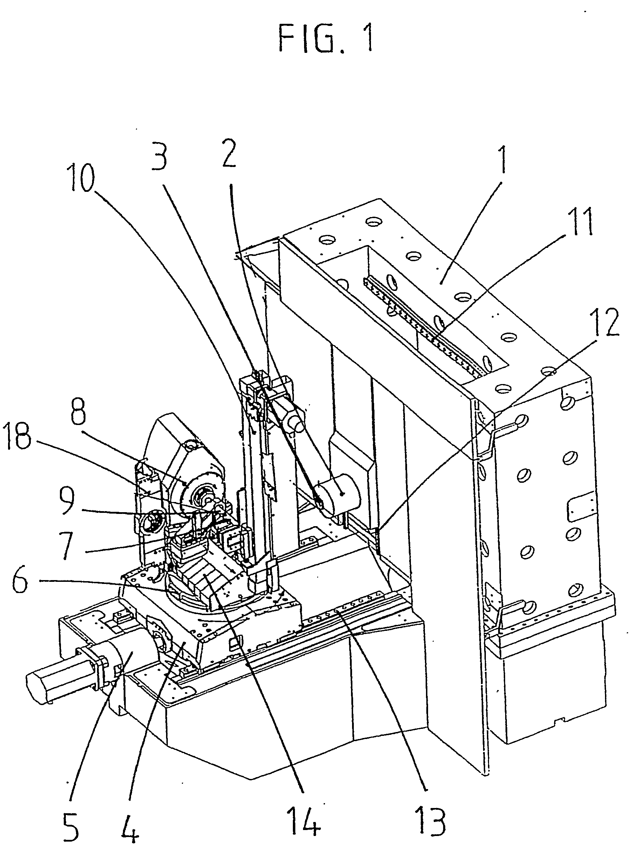

En référence tout d'abord à la figure 1 la partie d'usinage 1 du centre d'usinage comporte une broche porte-outils 2 qui peut se déplacer sur des coulisses 12 selon un axe vertical et sur des coulisses 11 selon un axe horizontal. Un outil 3 est monté dans la broche porte-outils 3. Un chariot porte-pièces 4 peut se déplacer sur des coulissses 13 selon un axe longitudinal. A titre d'exemple le chariot porte-pièces est actionné par un moteur 5. Une broche porte-pièces 8 est montée sur une couronne 6 qui est montée sur le chariot porte-pièces. Une pièce 7, cylindrique par exemple, est montée dans la broche porte-pièce. Une lunette de guidage 9 peut être montée pour maintenir la pièce dans une certaine partie de celle-ci pour le cas de pièces longues ou déformables. Une contre-pointe peut également être montée pour maintenir l'extrémité de la pièce 7. Un chargeur de lunette et contre-pointe 10 permet le chargement ou le déchargement de la lunette de guidage ou de la contre-pointe qui sont montées sur un bati 14 qui comporte des portions déplaçables pour permettre le déplacement de la lunette de guidage en cours de tournage et l'ajustement de la contre-pointe selon la longueur de la pièce. Un bras chargeur 18 est monté sur le chariot porte-pièce.

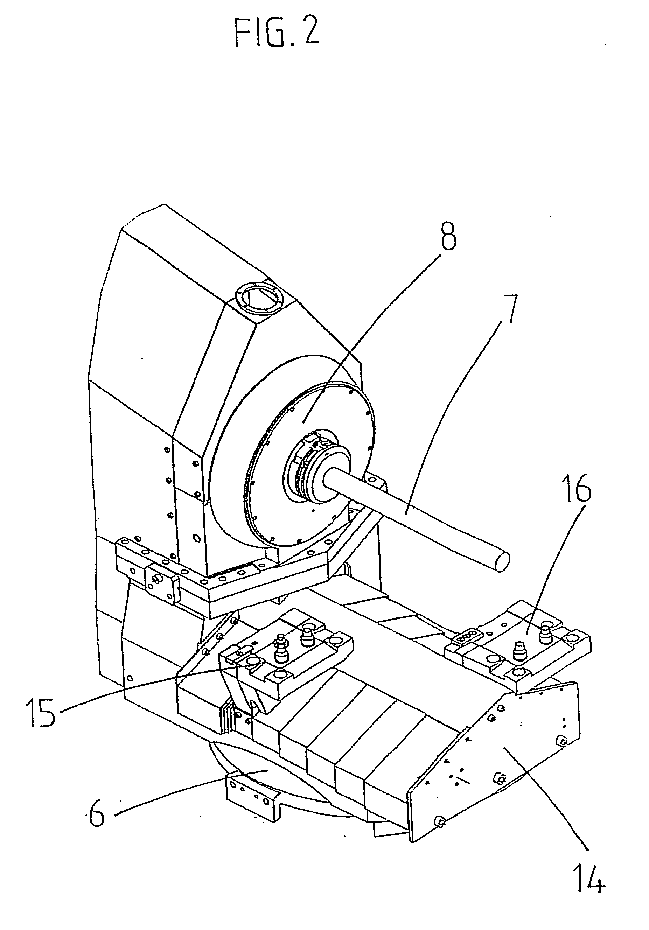

La figure 2 montre la pièce 7 qui est montée dans la broche 8. Un support 16 est prévu pour le montage de la contre-pointe et un support 15 est prévu pour le montage de la lunette de guidage.

Le bati 14 est monté sur une couronne qui est montée sur le chariot porte-pièces.

La figure 2 montre le cas d'une pièce suffisament rigide pour ne pas nécessiter l'utilisation de la lunette de guidage ou de la contre pointe.

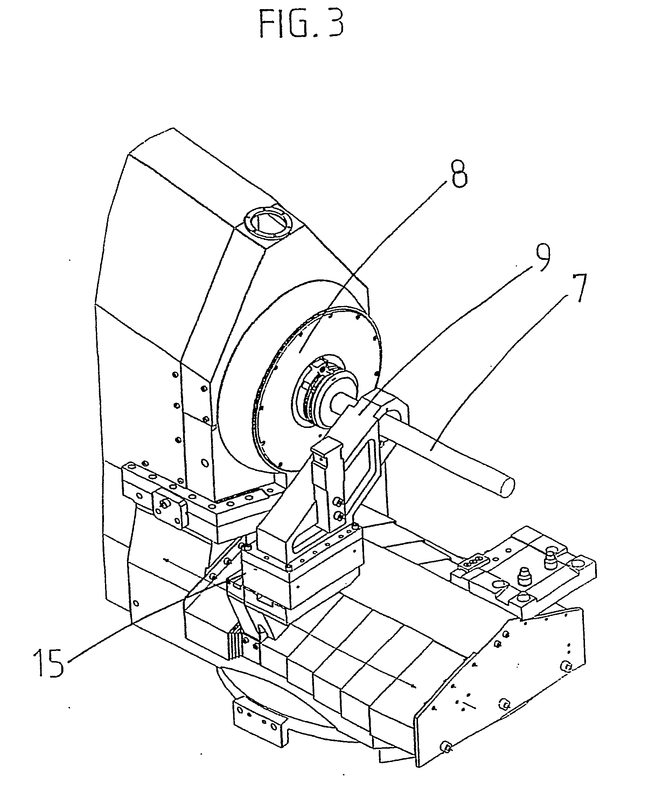

La figure 3 montre la pièce 7 montée dans la broche 8 et la lunette de guidage 9 montée sur son support 15.

La lunette de guidage est déplaçable sur le bâti.

La figure 3 montre un cas intermédiaire où la pièce à usiner n'est pas suffisament déformable pour nécessiter l'utilisation de la contre-pointe en addition.

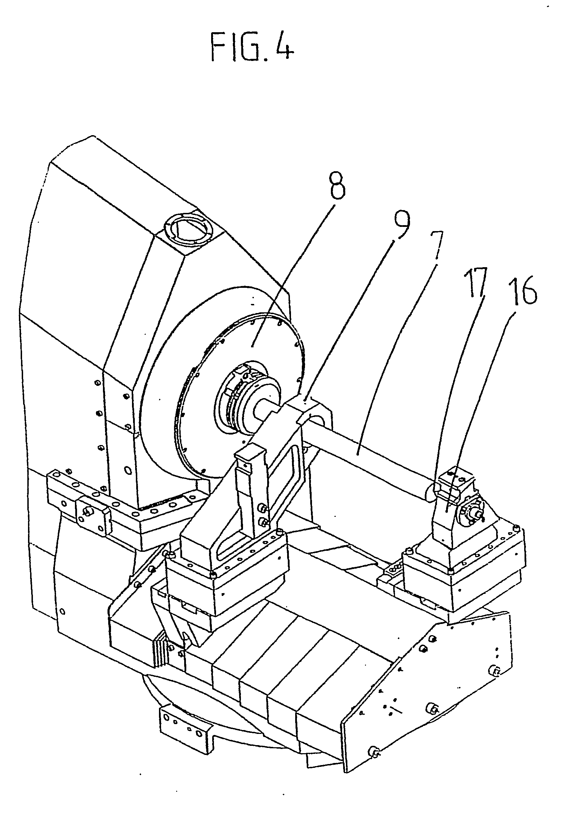

La figure 4 montre la pièce 7 qui est montée dans la broche 8, la pièce étant maintenue par la lunette de guidage 9 et par une contre-pointe 17 qui est montée dans un élément 16.

Dans la pratique les principes de l'invention permettent d'utiliser les deux broches de manière différente. A titre d'exemple pour un tournage un outil fixe peut être monté dans la broche porte-outils et la broche porte-pièces tourne, ou par exemple pour un alésage ou fraisage la broche porte-outils tourne et la broche porte-pièces est fixe ou peut tourner selon un angle voulu d'une manière séquentielle.

La broche porte-pièces, en combinaison avec les 4 axes déjà existants permet sur le même centre de réaliser une multitude d'opérations d'usinage et permet également d'obtenir une multitude de formes de pièces.

Selon les figures 1 à 4, un élément important est aussi le fait que la broche porte-pièce peut pivoter par rapport au chariot porte-pièce ce qui permet facilement d'usiner des pièces de formes très spéciales.

Les différents éléments annexes sont indépendants des principes de l'invention, différentes sortes de moteurs, ou différents moyens d'entraînement pouvant être utilisés par exemple.

## Revendications

1. Centre d'usinage multi-axes avec une broche porte-pièces comportant une partie d'usinage (1) dans laquelle est montée une broche porte-outils (2) qui peut se déplacer verticalement et transversalement et sur laquelle un chariot porte-pièces (4) peut se déplacer longitudinalement, un bâti comportant une broche porte-pièces (8) étant monté pivotant sur le chariot porte-pièces (4), une lunette de guidage (9) et une contre-pointe (17) étant montées déplaçables sur le bâti,
**caractérisé par** un chargeur de lunette et contre-pointe permettant le chargement ou le déchargement de la lunette ou la contre-pointe.

## Claims

1. Multi-axis machining centre with workpiece spindle featuring a machining part (1) in which is inserted a toolholder spindle (2) which can move vertically and transversally and on which a workpiece slide (4) can move longitudinally, a frame featuring a workpiece spindle (8) being inserted swinging on the workpiece slide (4), a guiding steadyrest (9) and a tailstock centre (17) being mounted so that they can move on the frame, **characterised by** a steadyrest and tailstock centre magazine enabling the insertion or removal of the steadyrest or tailstock centre.

## Patentansprüche

1. Mehrachsiges Bearbeitungszentrum mit einer Werkstückspindel, bestehend aus einem Bearbeitungsständer (1), in dem eine Werkzeugspindel (2) montiert ist, die sich vertikal und quer bewegen kann und auf der sich ein Werkstückschlitten (4) längs bewegen kann; einem Ständer mit einer Werkstückspindel (8), die drehbar auf dem Werkstückschlitten (4) montiert ist; einem Setzstock (Lunette) (9) und einer Gegenspitze (17), die beweglich am Ständer montiert sind,
**gekennzeichnet durch** eine Ladevorrichtung für den Setzstock (Lunette) und die Gegenspitze, die das Ein- und Ausfahren des Setzstocks (Lunette) und der Gegenspitze ermöglichen.
